# EUROPÄISCHE PATENTSCHRIFT

(11) **EP 0 433 412 B1**
(45) Veröffentlichungstag und Bekanntmachung des Hinweises auf die Patenterteilung: **09.03.1994**
(21) Anmeldenummer: 90908930.2
(22) Anmeldetag: 12.06.1990
(51) Int. Cl.: B23C 5/00, B23D 79/02, B23Q 15/013

(54) **SENSORGESTEUERTES ENTGRATEN UND SCHNITTSENSOR ZU DESSEN DURCHFÜHRUNG**
SENSOR-CONTROLLED DEBURRING AND SECTION SENSOR FOR IMPLEMENTING IT
EBARBAGE COMMANDE PAR PALPEUR ET PALPEUR DE COUPE POUR L'EXECUTION DE L'EBARBAGE

(30) Priorität: 18.06.1989 DE 3919977
(43) Veröffentlichungstag der Anmeldung: 26.06.1991
(73) Patentinhaber: INNOVATIONSGESELLSCHAFT FÜR FORTGESCHRITTENE PRODUKTIONSSYSTEME IN DER FAHRZEUGINDUSTRIE MBH, 10787 Berlin (DE)
(72) Erfinder: ANDERS, Michael, D-1000 Berlin 19 (DE); SIKORA, Ralf, D-1000 Berlin 27 (DE)
(74) Vertreter: Hoffmann, Klaus-Dieter, Dipl.-Ing.
(86) Internationale Anmeldenummer: DE9000450
(87) Internationale Veröffentlichungsnummer: WO9015684

(56) Entgegenhaltungen:
- EP-A- 0 264 673
- DE-C- 3 506 866
- GB-A- 2 000 700
- PATENT ABSTRACTS OF JAPAN, Band 10, Nr. 105 (M-471)(2162), 19. April1986 & JP, A, 60238210 (DAIKIN KOGYO K.K.)
- PATENT ABSTRACTS OF JAPAN, Band 9, Nr. 57 (M-363)(1780), 13 March 1985, & JP - A - 59192456 (SHINKOU SEISAKUSHO K.K.)

## Beschreibung

Die Erfindung betrifft ein sensorgesteuertes Entgraten metallischer Werkstücke, insbesondere von Gußstücken, mittels Stirnfräsen, bei dem die Werkzeugachse zur Normalen auf die Oberfläche des Grundmaterials des Werkstückes geneigt angeordnet wird, Werkzeug und Werkstück voneinander elektrisch isoliert werden, mindestens zwischen einem Teil des Werkzeuges und dem Werkstück eine elektrische Spannung angelegt, das Werkzeug numerisch gesteuert mit dem Werkstück in Eingriff gebracht und die Zeit des Kontaktes einer Werkzeugschneide mit dem Werkstück als Maß für die Breite der Bearbeitungsspur und damit der Eindringtiefe des Werkzeuges beim Entgraten verhältnismäßig kleiner Grate unabhängig von der Drehzahl des Werkzeuges bei dessen Steuerung verwertet wird.

Die Erfindung betrifft ferner einen Schnittsensor zur Durchführung des sensorgesteuerten Entgratens metallischer Werkstücke, insbesondere von Gußstücken der zuvor erwähnten Art, der von einem Werkstück sowie einem mit diesem in Eingriff stehenden Sensorfräser, dessen Längsachse zur Normalen auf die Oberfläche des Grundmaterials des Werkstückes geneigt ist und einer mit dem Sensorfräser verbundenen Auswerteeinheit gebildet ist, wobei das Werkstück oder der Sensorfräser von seiner Umgebung elektrisch isoliert und an einer Meßspannung gelegt ist.

Gußteile sind toleranzbehaftet. Die Gußrohlinge sind durch Angußsysteme und Grate unterschiedlichster Form und Höhe von einer geforderten definierten Geometrie entfernt. Sie müssen deshalb durch Putzen entgratet und geglättet werden. Dies geschieht überwiegend manuell, da beim automatisierten Gußputzen aufgrund des mangelhaften Toleranzausgleiches akzeptable Bearbeitungsergebnisse nur in Ausnahmefällen erreicht werden.

Für das automatisierte Gußputzen mit numerisch gesteuerten (NC) Werkzeugmaschinen besteht die Aufgabe darin, einer vorhandenen Werkstückkontur zu folgen und dabei Anschnittsysteme und Grate zu entfernen. Da letztere in Form, Breite und Höhe mit großer Toleranz schwanken, kann eine gleichbleibend hohe Putzqualität bei NC gesteuerten automatisierten Arbeitsgängen nur durch Sensoren erzielt werden. Diese überwachen die Abweichung der aktuellen Gratform und Lage von einem vorgegebenen Toleranzwert und müssen den Entgratvorgang entsprechend korrigieren.

Bisherige Ansätze gingen von Kraftmessungen, Leistungsmessungen und optischen Vermessungen aus. Keines dieser Prinzipien führte zu Ergebnissen, die mit denen eines Schnittsensors vergleichbar wären. Mit einem Schnittsensor ist es möglich, diese Abweichungen direkt zu messen und mit geeigneten Verfahreinheiten auszugleichen. Ein bekanntes sensorgesteuertes Entgraten der eingangs erwähnten Art (M. Weck und J.-P. Fürbaß, VDI-Z., Bd. 128 (1986), Nr. 22, S. 879 - 883) erweist sich dahingehend als nachteilig, daß es bei großen, umgebogenen Graten nicht mehr funktioniert. Biegt sich bei verhältnismäßig hohen Graten dieser um, so wird bei dieser Kontaktmessung die Kontaktzeit nicht mehr durch das Grundmaterial bestimmt, sondern durch den umgebogenen Grat. Dadurch wird der automatisch geführte Sensorfräser fehlgeleitet.

Angestrebt wird ein Sensorfräser, der bei einfachster Handhabung auch extrem hohe Grate als solche erkennt und von dem Grundmaterial abspant.

Der Erfindung liegt die Aufgabe zugrunde, ein sensorgesteuertes Entgraten und einen Schnittsensor zu dessen Durchführung gemäß der eingangs erwähnten Art so zu gestalten, daß in rationeller und effektiver Weise die Entgratungsqualität erhöht wird.

Diese Aufgabe wird erfindungsgemäß dadurch gelöst, daß in einem Arbeitsgang des Werkzeuges der über eine vorbestimmte Höhe über der Oberfläche des Grundmaterials des Werkstückes ragende, verhaltnismäßig hohe Grat bis auf eine vorbestimmte Höhe abgeschnitten und der verbleibende Restgrat entsprechend der Entgratung der verhältnismäßig kleinen Grate sensorgesteuert zerspant werden.

Vorteilhafterweise werden die verhältnismäßig hohen Grate auf die vorbestimmte Höhe vorgefräst, das Werkstück oder das Werkzeug von ihrer Umgebung elektrisch isoliert und mit einer Meßspannung von 15 Volt versorgt. Vorzugsweise wird beim Entgraten der vorgefrästen Restgrate und/oder der verhältnismäßig kleinen Grate die drehzahlunabhängige Messung der Schnittbreite und damit über die Geometrie des Sensorfräsers die Eindringtiefe des Werkzeuges über die Bildung des Verhältnisses zwischen der Kontaktzeit der Werkzeugschneide und der Zeit vorgenommen, in der kein Eingriff der Werkzeugschneide in das Werkstück erfolgt.

Der erfindungsgemäße Schnittsensor zur Durchführung des sensorgesteuerten Entgratens metallischer Werkstücke, insbesondere von Gußstücken, der eingangs erwähnten Art zeichnet sich dadurch aus, daß auf den Sensorfräser ein Gratvorschneider aufgesetzt ist, dessen Längsachse mit der des Sensorfräsers zusammenfällt, und daß der Sensorfräser und der Gratvorschneider voneinander elektrisch isoliert und zumindest der Sensorfräser über einen Kontakt mit der Masse oder Meßspannung verbunden ist.

Vorteilhafte Weiterbildungen des Schnittsensors ergeben sich aus den Patentansprüchen 6 bis 12.

Vorzugsweise besteht das Werkzeug aus einem Sensorfräser, der mit einem Vorschnittfräser kombiniert ist. Hierbei sind die beiden aufeinandergesetzten Fräser, der Sensorfräser und der Vorschnittfräser, elektrisch voneinander isoliert. Grate, die höher als ein bestimmtes Maß sind, werden von dem Vorschnittfräser so weit abgefräst, daß die Schnittbreitenmessung zwischen Grundmaterial und vorgefrästem Restgrat durch den Sensorfräser nicht beeinflußt wird.

Das Werkstück oder die Fräser werden von ihrer Umgebung elektrisch isoliert und mit einer Meßspannung von +15 Volt versorgt. Die beiden Fräserbestandteile, Sensorfräser und Vorfräser, werden jeweils über einen Schleifring und wie bei elektrischen Maschinen üblich, mit Kohlebürsten mit der Masse oder mit +15 Volt verbunden. Die Schneidenanzahl der Fräser ist so, daß immer nur eine Schneide im Eingriff ist und den Kontakt schließt. Die Schneiden werden vorteilhaft senkrecht auf der Mantellinie des Fräsers angeordnet, um eine möglichst exakte Kontaktzeitmessung zu erhalten.

Die Schneiden des Vorschnittfräsers können dagegen beliebig geformt sein, da dieser nur auf Gratkontakt abgefragt wird. Bei Kontakt ist eine Reduzierung der Vorschubgeschwindigkeit um einen konstanten Wert oder eine drehzahlabhängige Vorschubregelung möglich. Vorzugsweise liegt der Neigungswinkel der Längsachse des Sensorfräsers im Bereich von 10° bis 60°.

Die mit der Erfindung erzielten Vorteile für das automatisierte Gußputzen sind:
- Genaue Messung der Schnittbreite beim Fräsen. Dies ist eine Voraussetzung für die Erzielung einer hohen Bearbeitungsgüte beim Gußputzen,
- schnelle Messung der Parameter des Arbeitsablaufes,
- eine gute Bearbeitung des Werkstückes, unabhängig von der Form und Größe des Grates,
- einfachster Aufbau, Handhabung und Integration in bestehende Systeme,
- geringe Herstellungskosten.

Ein vorteilhaftes Ausführungsbeispiel des erfindungsgemäßen Schnittsensors wird nachstehend anhand der Zeichnung näher erläutert. In dieser sind:
- Fig. 1: eine schematische Aufrißansicht des im Einsatz befindlichen Schnittsensors ohne seine Auswerteeinheit und
- Fig. 2: eine perspektivische Ansicht des Schnittsensors nach Fig. 1 von oben gesehen.

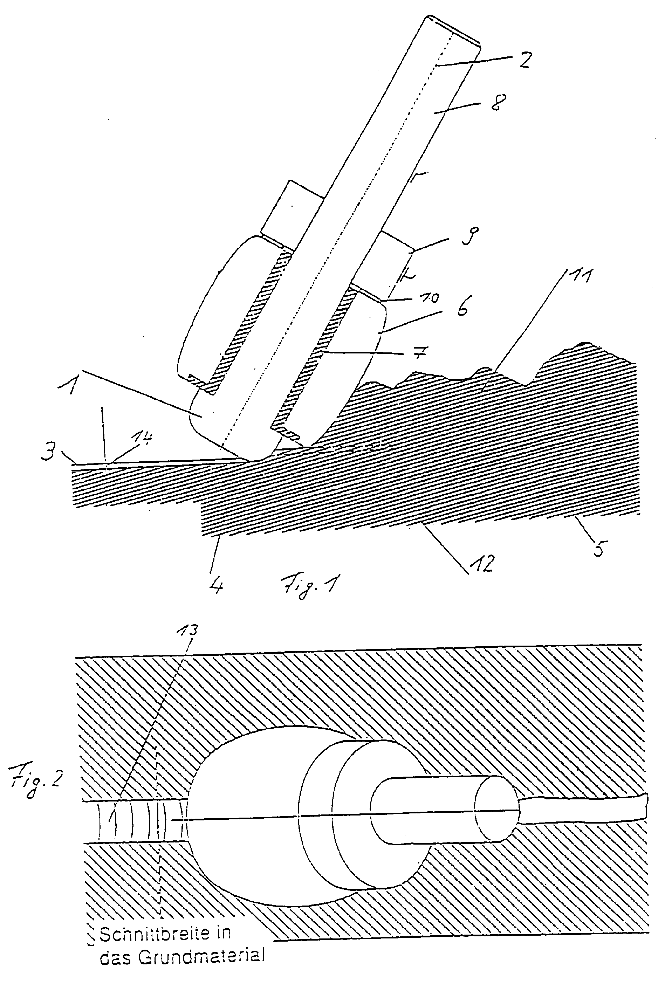

Wie aus Fig. 1 hervorgeht, weist der Schnittsensor einen Sensorfräser 1 auf, dessen Längsachse 2 zur Normalen auf die Oberfläche 3 des Grundmaterials 4 eines Werkstückes 5 geneigt ist, das zusammen mit dem Sensorfräser 1 und einer mit diesem verbundenen, nicht dargestellten Auswerteeinheit den Schnittsensor bildet. Auf den Sensorfräser 1 ist ein Vorschnittfräser 6 aufgesetzt, dessen Längsachse sich mit der Längsachse 2 des Sensorfräsers 1 deckt und der von diesem durch eine elektrische Isolation 7 elektrisch isoliert ist. Der Sensorfräser 1 besteht aus HM- oder HSS-Stahl. Der Durchmesser des Vorschnittfräsers 6, der aus Keramik bestehen kann, ist größer als der des Sensorfräsers 1. Die Schneiden des Sensorfräsers stehen senkrecht auf dessen Mantellinie, die Schneiden des Vorschnittfräsers 6 sind beliebig geformt. Auf der Welle 8 des Sensorfräsers 1 ist oberhalb des Vorschnittfräsers 6 ein Kontaktblock 9 aufgesetzt, der gegenüber dem Vorschnittfräser 6 durch eine Isolationsschicht 10 isoliert ist.

Beim sensorgesteuerten Entgraten werden verhältnismäßig hohe Grate 11, die über eine vorbestimmte Höhe über die Oberfläche 3 des Grundmaterials 4 des Werkstücks 5 hinausragen, vom Vorschnittfräser 6 bis auf die vorbestimmte Höhe vorgefräst und der verbleibende Restgrat 12 wie auch die Grate verhältnismäßig kleiner Höhe vom Sensorfräser 1 in einem Arbeitsgang des kombinierten Werkzeugs zerspant. Die Zeit des Kontakts einer Werkzeugschneide des Sensorfräsers 1 dient als Maß für die Breite der Bearbeitungsspur 13 und damit für die Schnittiefe 14 des Werkzeugs in das Grundmaterial des Werkstückes.

## Patentansprüche

1. Sensorgesteuertes Entgraten metallischer Werkstücke (5), insbesondere von Gußstücken mittels Stirnfräsen, bei dem die Werkzeugachse zur Normalen auf die Oberfläche (3) des Grundmaterial (4) des Werkstückes geneigt angeordnet wird, Werkzeug und Werkstück voneinander elektrisch isoliert werden, mindestens zwischen einem Teil des Werkzeuges und dem Werkstück eine elektrische Spannung angelegt, das Werkzeug numerisch gesteuert mit dem Werkstück in Eingriff gebracht und die Zeit des Kontaktes einer Werkzeugschneide mit dem Werkstück als Maß für die Breite der Bearbeitungsspur und damit der Eindringtiefe des Werkzeuges beim Entgraten verhältnismäßig kleiner Grate unabhängig von der Drehzahl des Werkzeuges bei dessen Steuerung verwertet wird, dadurch gekennzeichnet, daß in einem Arbeitsgang des Werkzeuges über eine vorbestimmte Hohe über die Oberfläche des Grundmaterials des Werkstückes ragende, verhältnismäßig hohe Grate (11) bis auf die vorbestimmte Höhe abgeschnitten und die verbleibenden Restgrate entsprechend der Entgratung der verhältnismäßig kleinen Grate sensorgesteuert zerspant werden.

2. Sensorgesteuertes Entgraten nach Anspruch 1, dadurch gekennzeichnet, daß die verhältnismäßig hohen Grate auf die vorbestimmte Hohe vorgefräst werden.

3. Sensorgesteuertes Entgraten nach Anspruch 1 und 2, dadurch gekennzeichnet, daß das Werkstück oder das Werkzeug von ihrer Umgebung elektrisch isoliert und mit einer Meßspannung von 15 Volt versorgt werden.

4. Sensorgesteuertes Entgraten nach Anspruch 1 bis 3, dadurch gekennzeichnet, daß beim Entgraten der vorgefrästen Restgrate und/oder der verhältnismäßig kleinen Grate die drehzahlunabhängige Messung der Schnittbreite und damit über die Geometrie des Sensorfräsers die Eindringtiefe des Werkzeuges über die Bildung des Verhältnisses zwischen der Kontaktzeit der Werkzeugschneide und der Zeit vorgenommen wird, in der kein Eingriff der Werkzeugschneide in das Werkstück erfolgt.

5. Schnittsensor zur Durchführung des sensorgesteuerten Entgratens metallischer Werkstücke (5), insbesondere von Gußstücken gemäß den Ansprüchen 1 bis 4, der von einem Werkstück sowie einem mit diesem in Eingriff stehenden Sensorfräser (1), dessen Längsachse (2) zur Normalen auf die Oberfläche (3) des Grundmaterials (4) des Werkstückes geneigt ist, und einer mit dem Sensorfräser verbundenen Auswerteeinheit gebildet ist, wobei das Werkstück oder der Sensorfräser von seiner Umgebung elektrisch isoliert und an eine Meßspannung gelegt ist, dadurch gekennzeichnet, daß auf den Sensorfrüser (1) ein Gratvorschneider aufgesetzt ist, dessen Längsachse (2) mit der des Sensorfräsers (1) zusammenfällt, und daß der Sensorfräser (1) und der Gratvorschneider voneinander elektrisch isoliert und zumindest der Sensorfräser (1) über einen Kontakt (9) mit der Masse oder der Meßspannung verbunden ist.

6. Schnittsensor nach Anspruch 5, dadurch gekennzeichnet, daß der Gratvorschneider ein Vorschnittfräser (6) ist.

7. Schnittsensor nach Anspruch 5, dadurch gekennzeichnet, daß der Gratvorschneider eine Schleifscheibe ist.

8. Schnittsensor nach Anspruch 5 bis 7, dadurch gekennzeichnet, daß der Durchmesser des Gratvorschneiders größer als der des Sensorfräsers ist.

9. Schnittsensor nach Anspruch 5 bis 7, dadurch gekennzeichnet, daß der Gratvorschneider aus nichtleitendem Material besteht.

10. Schnittsensor nach Anspruch 9, dadurch gekennzeichnet, daß das nichtleitende Material Keramik ist.

11. Schnittsensor nach Anspruch 5, dadurch gekennzeichnet, daß die Schneiden des Sensorfräsers (1) senkrecht auf dessen Mantellinie stehen.

12. Schnittsensor nach Anspruch 5 und 6, dadurch gekennzeichnet, daß die Schneiden des Vorschnittfräsers (6) beliebig geformt sind.

## Claims

1. Sensor-controlled deburring of metallic workpieces (5), in particular of castings by face milling, in which process the axis of the tool is tilted relative to the normal line on the surface (3) of the base material (4) (4) of the workpiece, the tool and workpiece are electrically isolated from one another; an electrical voltage is applied at least between one part of the tool and the workpiece, the tool engages under numerical control with the workpiece, and the time of contact of a cutting edge with the workpiece is evaluated independently of the speed of the tool during its control as a measure for the width of the tool mark and thus the penetrating depth of the tool when deburring relatively small flashes, characterized in that in one operation of the tool the relatively high flashes (11), projecting above a predeterminde height over the surface of the base material of the workpiece, are cut off to a predeterminde height and the remaining residual flashes are machined under sensor control in accordance with the deburring of relatively small flashes.

2. Sensor-controlled deburring, as claimed in claim 1, characterized in that the relatively high flashes are premilled to the predeterminde height.

3. Sensor-controlled deburring, as claimed in claim 1 and 2, characterized in that the workpiece or the tool are electrically isolated and supplied with a measurement voltage of 15 volts.

4. Sensor-controlled deburring, as claimed in claims 1 to 3, characterized in that, when d urring the premilled residual flashes and/or the relatively small flashes, the speed-independent measurement is made of the cutting width and thus, via the geometry of the sensor cutter, the penetrating depth of the tool via the formation of the ratio between the contact time of the cutting edge and the time in which the cutting edge does not engage with the workpiece.

5. Cutting sensor to conduct the sensor-controlled deburring of metallic workpieces (5), in particular of castings, as claimed in claim 1 to 4, that is formed by a workpiece and a sensor cutter (1) that engages with the workpiece and whose longitudinal axis (2) slope relative to the normal line on the surface (3) of the base material (4) of the workpiece, by an evaluating unit connected to the sensor cutter, where the workpiece or the sensor cutter is electrically isolated from its environment and is applied to a measurement voltage, charaterized in that on the sensor cutter (1) is mounted a flash roughing cutter, whose longitudinal axis (2) coinci with that of the sensor cutter (1), and that the sensor cutter (1) and the flash roughing cutter are electrically isolated from one another and at least the sensor cutter (1) is connected to ground or the measurement voltage via a contact (9).

6. Cutting sensor, as claimed in claim 5, characterized in that the flash roughing cutter is a roughing milling machine (6).

7. Cutting sensor, as claimed in claim 5, characterized in that the flash roughing cutter is a grinding wheel.

8. Cutting sensor, as claimed in claims 5 to 7, characterized in that the diameter of the flash roughing cutter is greater than that of the sensor cutter.

9. Cutting sensor, as claimed in claims 5 to 7, characterized in that the flash roughing cutter is made of nonconducting material.

10. Cutting sensor, as claimed in claim 9, characterized in that the nonconducting material is ceramic.

11. Cutting sensor, as claimed in claim 5, characterized in that the cutting edges of the sensor cutter (1) are perpendicular to its side line.

12. Cutting sensor, as claimed in claims 5 and 6, characterized in that the cutting edges of the roughing cutter (6) are any shape.

## Revendications

1. Ebarbage à commande sensorrielle de pièces à travailler métalliques (5), tout partiqulièrement de pièces de fonte moyennant fraisage en bout où l'axe de l'outil par rapport à la normale est disposé en pente sur la surface (3) de la base (4) de la pièce à travailler, où l'outil et la pièce à travailler sont isolés électriquement l'un de l'autre, où une tension électrique est appliquée au moins entre une partie del'outil et la pièce à travailler, où l'outil à commande numérique est mis en prise avec la pièce à travailler et où le temps de contact d'un fil d'outil avec la pièce à travailler est, indépendamment de la vitesse de l'outil, utilisé pour sa commande comme mesure por la largeur du trait d'outil et par conséquent de la profondeur de pénétration de l'outil lors de l'ébarbage d'ébarbures relativement petites, caractérisé par le fait que dans une opération de l'outil les ébarbures relativement hautes dépassant une hauteur prédéterminée au-dessus de la surface de la base de la pièce à travailler sont coupées jusqu'a la hauteur prédéterminée et que les ébarbures résiduelles sont enlevées par commande sensorielle conformément a l'ébarbage des ébarbures (11) relativement petites.

2. Ebarbage à commande sensorielle suivant revendication 1, caractérisé par le fait que les ébarbures relative ment hautes sont dégrossies a la fraise sur la hauteur prédéterminée.

3. Ebarbage à commande sensorielle suivant revendications 1 et 2, caractérisé par le fait que la pièce à travailler ou l'outil sont isolés électriquement de leur entourage et alimentés par une tension de mesure de 15 volts.

4. Ebarbage à commande sensorielle suivant revendications 1 à 3, caractérisé par le fait que lors de l'ébarbage des ébarbures dégrossies à la fraise résiduelles et/ou des ébarbures relativement petites la mesure indépendante de la vitesse de la largeur de coupe et par conséquent par-dessus la géométrie de la fraise sensorielle la profondeur de pénétration de l'outil est réalisée moyennant la formation du rapport entre le temps de contact du fil d'outil et le temps où le fil d'outil n'est pas en prise avec la pièce à travailler.

5. Sensor de coupe pour la réalisation de l'ebarbage à commande sensorielle des pièces à travailler (5) métalliques, tout particulièrement de pièces de fonte suivant les revendications 1 à 4, formé d'une pièce à travailler ainsi que d'une fraise sensorielle (1) en prise avec celleci, dont l'axe longitudinal (2) à la normale est incliné sur la surface (3) de la base (4) de la pièce à travailler et d'une unité d'évaluation reliée à la fraise sensorielle, la pièce à travailler ou la fraise sensorielle étant isolées électriquement de leur entourage et étant soumise à une tension de mesure, caractérisé par le fait que fa fraise sensorielle (1) est équipée d'un précoupeur d'ébarbures dont l'axe longitudinal (2) coincide avec celui de la fraise sensorielle (1) et que la fraise sensorielle (1) et le précoupeur d'ébarbures sont isolés électriquement l'un de l'autre et qu'au moins la fraise sensorielle (1) est, moyennant un contact (9), reliée à la masse ou la tension de mesure.

6. Sensor de coupe suivant revendication 5, caractérisé par le fait que le précoupeur d'ébarbures est une fraise à dégrossir (6).

7. Sensor de coupe suivant revendication 5, caractérisé par le fait que le précouper d'ébarbures est une meule.

8. Sensor de coupe suivant revendications 5 à 7, caractérisé par le fait que la diamètre du précoupeur d'ébarbures est plus grand que celui de la fraise sensorielle.

9. Sensor de coupe suivant revendications 5 à 7, caractérisé par le fait que le précoupeur d'ébarbures est fait de matière isolante.

10. Sensor de coupe suivant revendication 9, caractérisé par le fait que la matière isolante est de la céramique.

11. Sensor de coupe suivant revendication 5, caractérisé par le fait que les fils de la fraise sensorielle (1) sont disposés verticalement sur sa génératrice.

12. Sensor de coupe suivant revendications 5 et 6, caractérisé par le fait que les fils de la fraise à dégrossir (6) sont formés à volonté.
